# DEMANDE DE BREVET EUROPEEN

(11) **EP 4 585 993 A1**
(43) Date de publication de la demande: **16.07.2025**
(21) Numéro de dépôt: 24209743.4
(22) Date de dépôt: 30.10.2024
(51) Int. Cl.: G02B 27/01

(54) **LUNETTE DE RÉALITÉ ASSISTÉE AVEC CLAVIER DE COMMANDE À DISTANCE ET FIXATION ADAPTABLE**

(30) Priorité: 09.01.2024 BE 202405008
(71) Demandeur: Get Your Way SRL, 4340 Awans (BE)
(72) Inventeur: Dessambre, Nicolas, 4340 Awans (BE); Malherbe, Antoine, 4340 Awans (BE); Jenchenne, Pierre, 4340 Awans (BE)
(74) Mandataire: Dennemeyer & Associates S.A.

(57) **Abrégé**

La présente divulgation concerne une lunette de réalité assistée (10) attachable à un accessoire de tête d'un utilisateur, la lunette (10) comprenant un corps principal et une tête optique pivotable par rapport au corps principal autour d'une articulation reliant les deux. La divulgation concerne aussi un dispositif portable de commande à distance (20) de la lunette de réalité assistée (10), un système de réalité assistée (1) comprenant la lunette de réalité assistée (10) et le dispositif portable (20), et un accessoire de tête (30) adapté pour être attaché à la lunette de réalité assistée (10).

## Description

### Contexte de l'invention

La présente description se rapporte au domaine des dispositifs de réalité augmentée et de réalité assistée, en particulier à une lunette de réalité assistée. La présente description se rapporte aussi aux dispositifs de commande et/ou aux dispositifs de fixation d'une telle lunette de réalité assistée.

### Arrière-plan de l'invention

Dans de nombreux secteurs industriels, par exemple dans les domaines de la construction, de la logistique, du transport, de l'automobile ou encore de l'aéronautique, les travailleurs et les ouvriers sont souvent confrontés à un éventail de difficultés qui entrave l'efficacité et la précision dans l'exécution de leurs tâches. Un obstacle particulier réside dans la difficulté d'accéder rapidement et efficacement à des informations cruciales lors d'actions effectuées sur le terrain, un écueil qui tend à accroître le taux d'erreurs humaines et à gaspiller un temps précieux. Souvent, les travailleurs et les ouvriers doivent se fier à des outils traditionnels tels que des manuels papier ou des supports numériques basiques, qui ne fournissent pas une aide contextuelle immédiate, ce qui augmente ainsi les risques d'erreurs ou d'accidents, notamment dans des environnements où la sécurité est une préoccupation majeure.

Par exemple, un livreur motorisé doit pouvoir identifier rapidement son itinéraire et/ou sa destination afin de livrer un colis à une adresse précise. Dans des conditions normales, il est contraint de s'arrêter fréquemment pour consulter sa localisation ou ses instructions de livraison sur un appareil mobile, perdant ainsi un temps précieux et augmentant la probabilité d'erreurs dans la navigation. De manière similaire, un magasinier doit pouvoir rapidement connaître le contenu de paquets entreposés dans un lieu de stockage. Ces situations mettent en lumière le besoin de fournir des solutions technologiques plus efficaces et aptes à fournir des informations visuelles en temps réel, fournissant ainsi une représentation approfondie des détails spécifiques à chaque tâche, et leur contexte.

Pour traiter ce problème, il existe différents systèmes permettant de contextualiser visuellement des données à un utilisateur, notamment au moyen de la réalité augmentée. Les techniques de réalité augmentée visent à superposer au champ de vision d'un individu des éléments tels que des sons, des images ou des vidéos, ces éléments étant fournis par un système informatique séparé. Ces techniques incrustent de façon réaliste des objets virtuels sur les images du monde réel, par exemple grâce à l'appareil photo d'un téléphone portable ou à des appareils vidéo spécifiques, cette incrustation se déplaçant avec le champ de vision de l'individu.

Par exemple, la demande de brevet internationale WO 2014/191460 A1 décrit un système de vision oculaire comprenant une batterie et un module afficheur dont le principe est basé sur un guide optique. Ce guide optique permet de superposer une image transportée à une scène extérieure perçue par l'oeil d'un utilisateur. Le module afficheur, ainsi que d'autres éléments nécessaires au fonctionnement du système, sont destinés à être fixés sur les branches de lunettes portées par un utilisateur.

Malheureusement, les dispositifs connus présentent de nombreux désavantages.

Tout d'abord, ces dispositifs sont généralement intégrés directement dans une monture ou des lunettes, ce qui limite leur accessibilité ou leur utilisation chez certains utilisateurs, par exemple si ces utilisateurs portent déjà des lunettes de vue. En outre, les dispositifs connus souffrent souvent d'une luminosité insuffisante ou inadaptée par rapport à l'environnement où ils sont utilisés, ce qui rend leur utilisation en extérieur particulièrement difficile. Ensuite, ces dispositifs ne permettent pas non plus une grande variabilité dans le positionnement de l'affichage par rapport aux yeux de leurs utilisateurs, ni la possibilité d'orienter ces dispositifs à volonté. Ainsi, l'orientation du moyen de projection optique dans les dispositifs connus est souvent prédéterminée et fixée.

Par ailleurs, les dispositifs existants nécessitent généralement une connexion filaire entre le moyen d'affichage et le système informatique associé, notamment au moyen de câbles haute définition pour pouvoir communiquer des informations de volume important, ou encore des câbles électriques permettant de recharger ceux-ci électriquement et/ou effectuer des mises à jour. Cependant, ces câbles sont encombrants.

De plus, les dispositifs connus présentent une autonomie limitée, car leurs composants consomment une quantité importante d'énergie, en particulier si ces composants comprennent des caméras, des capteurs de positionnement GPS ou encore des moyens de connexion par Wi-Fi. De tels dispositifs embarquent des systèmes embarqués avancés ce qui en réduit l'ergonomie et complique aussi les réparations de ces dispositifs en cas de dégâts.

Ces dispositifs présentent aussi un poids important et un encombrement non négligeable. Le poids de ces dispositifs peut parfois excéder 150 voire 180 grammes, ce qui engendre des douleurs au niveau des points d'appui lorsque ces appareils sont portés pendant une durée prolongée, par exemple au niveau de la nuque de leurs utilisateurs.

Par conséquent, il est impératif de développer des solutions qui capitalisent sur la possibilité de fournir aux utilisateurs une assistance visuelle pertinente et ergonomique, sans encombrer leur champ de vision, garantissant une interaction plus naturelle avec le monde réel.

### Objet et résumé de l'invention

Afin de répondre à ce ou à ces inconvénients, il est proposé selon un premier objet des présentes une lunette de réalité assistée adaptée pour être attachée à un accessoire de tête d'un utilisateur, la lunette comprenant une tête optique et un corps principal, la tête optique et le corps principal étant reliés l'une à l'autre par une articulation, l'articulation permettant une rotation de la tête optique par rapport au corps principal autour d'un axe vertical du corps principal, appelé premier axe, la tête optique comprenant un module optique qui est connecté à un circuit de commande, le corps principal comprenant le circuit de commande, le circuit de commande comprenant une antenne de communication à distance, le corps principal étant adapté pour être relié à une batterie électrique configurée pour alimenter électriquement le circuit de commande et le module optique, le corps principal comprenant en outre un élément de fixation pour attacher le corps principal à l'accessoire de tête, le circuit de commande étant configuré pour faire afficher, par le module optique, à partir de données d'affichage reçues par l'antenne de communication à distance, des informations graphiques visibles par l'utilisateur.

Ceci fournit un dispositif ergonomique, confortable et utilisable sans les mains, par ailleurs facile de fixation sur un accessoire de tête, avec l'avantage d'être ajustable selon au moins un degré de liberté, permettant un affichage tête haute d'informations graphiques, textuelles ou visuelles, au porteur de la lunette.

L'élément de fixation permet aussi une meilleure flexibilité dans le mode d'attache de la lunette à différents supports, en particulier un accessoire de tête. Le fait que la batterie électrique est amovible facilite son remplacement et rend également plus aisé le transport de la lunette en pièces séparées lorsque la lunette n'est pas en fonctionnement, puisque le corps principal et la batterie électrique peuvent être déconnectés.

La lunette permet aussi d'améliorer la sécurité des utilisateurs dans le cadre d'activités nécessitant une superposition de ces informations graphiques à leur champ de vision. En particulier, au moins un degré de liberté est défini par une rotation dans un plan horizontal par rapport à la position de l'utilisateur, qui est une position verticale si l'utilisateur est debout. La tête optique peut ainsi être déplacée rapidement et précisément devant l'oeil de l'utilisateur en cas de besoin, ou au contraire pour écarter rapidement l'affichage des données d'affichage hors du champ de vision de l'utilisateur et donc éviter de gêner sa vue globale s'il le souhaite.

Dans les présentes, la lunette définit une lunette de « réalité assistée », abrégée sous la forme « aR » (se traduisant par « assisted Reality » en anglais). La réalité assistée est une technologie qui permet de superposer des informations du monde réel à la vision d'un utilisateur sans l'entraver. La réalité assistée associe typiquement un logiciel et un dispositif de visualisation mains libres, pour permettre aux utilisateurs de voir apparaître dans leur champ de vision les informations dont ils ont besoin, tandis que la réalité augmentée utilise des contenus numériques et des contenus générés par un logiciel pour créer une expérience interactive dans des environnements de travail réels. En utilisation dans au moins une lunette, ceci rend la réalité assistée plus pratique et plus accessible que la réalité augmentée dans le cadre des tâches effectuées par des travailleurs ou des ouvriers.

Selon une réalisation possible, la batterie électrique de la lunette est amovible.

Dans les présentes, ceci signifie que la lunette comprend, lorsqu'elle n'est pas en fonctionnement en raison de l'absence de batterie électrique, un logement adapté pour accueillir une telle batterie électrique amovible, ce logement présentant une connexion électrique à l'antenne de communication à distance, au circuit de commande et au module optique, de sorte qu'une batterie électrique placée dans le logement alimente l'antenne de communication à distance, le circuit de commande et le module optique lorsque la lunette est en fonctionnement. La ou les connexion(s) électrique(s) entre le logement de la batterie, la batterie et les autres éléments est ou sont de préférence non filaire(s) au niveau du corps principal, par exemple via des connecteurs de carte de circuit imprimé, ou un branchement en prise directe.

De par son caractère amovible, et donc remplaçable, cette particularité de la batterie permet de réduire voire d'éliminer le risque pour l'utilisateur d'être à court d'énergie sur le terrain. On favorise aussi l'emploi de batteries plus légères.

Selon une réalisation possible, la batterie est une batterie lithium-polymère, appelée batterie « Li-Po », ou une batterie phosphate-lithium-fer, appelée batterie « LiFe ».

Ceci permet d'améliorer l'autonomie énergétique de la lunette grâce à l'implémentation d'une source d'alimentation présentant une densité énergétique accrue et une réduction substantielle du poids, facilitant ainsi une utilisation prolongée de la lunette sans compromettre le confort et la mobilité de l'utilisateur.

Selon un mode de réalisation, l'articulation limite la rotation de la tête optique par rapport au corps principal autour du premier axe par un premier angle sensiblement compris entre -15° et +40°, le premier angle étant appelé angle de lacet, l'angle de lacet étant mesuré entre un axe horizontal principal de la tête optique et un axe horizontal principal du corps principal.

Dans les présentes, l'angle de lacet est défini comme étant égal à 0° lorsque l'axe horizontal principal de la tête optique et l'axe horizontal principal du corps principal sont perpendiculaires entre eux.

Dans les présentes, on entend par « angle sensiblement égal à une valeur » un angle dont l'ouverture est égale à cette valeur à plus ou moins un degré, 1°, près, pour des raisons de précision de mesure, compte tenu des dimensions types de la lunette et de ses éléments.

Ceci permet une première orientation du module optique par rapport à la tête de l'utilisateur et, en particulier, par rapport à au moins l'un de ses yeux. Cette première orientation permet un positionnement précis de la tête optique dans le champ de vision de l'utilisateur, afin d'assurer une visualisation optimale des informations.

Dans les présentes, et similairement au langage technique de la navigation aérienne, on se référera à au moins trois orientations distinctes définies au moyen d'angles parmi lesquels un angle de tangage, un angle de roulis, et l'angle de lacet précité.

Selon un mode de réalisation, le module optique est pivotable en rotation autour d'un axe de la tête optique, appelé deuxième axe, le deuxième axe étant situé dans un plan horizontal qui est sensiblement perpendiculaire au premier axe, la rotation d'un axe principal du module optique étant limitée autour du deuxième axe par un deuxième angle, appelé angle de roulis, qui est sensiblement compris entre -25° et +25° lorsque l'angle de roulis est mesuré par rapport au plan horizontal, l'axe principal du module optique étant situé dans un plan qui est parallèle au premier axe et perpendiculaire au deuxième axe, l'angle de roulis étant défini comme étant égal à 0° lorsque l'axe principal du module optique est sensiblement perpendiculaire au premier axe.

Dans les présentes, le premier axe et le deuxième axe sont implicitement et sensiblement perpendiculaires entre eux, c'est-à-dire qu'ils forment entre eux un angle de plus ou moins 90° avec une précision de plus ou moins 1°.

Les limites permises aux angles de lacet et de roulis permettent de définir des tolérances de la lunette dans son ensemble qui assurent une robustesse et une longévité d'utilisation significativement améliorée, que ce soit pour le module optique ou pour la lunette dans son entièreté.

Selon une réalisation possible, le(s) mécanisme(s) de rotation autour du premier axe et/ou du deuxième axe est mis en oeuvre au moyen d'une friction entre plusieurs éléments comprenant du plastique.

Outre un amortissement de cette ou de ces rotations, ceci permet d'assurer une rotation fluide mais néanmoins suffisamment serrée pour que la tête optique ou le module optique en rotation se bloque(nt) dans n'importe quelle position, c'est-à-dire selon toute valeur angulaire de l'angle de lacet ou de l'angle de roulis, avec de préférence une précision de plus ou moins 1°.

Selon un mode de réalisation, l'élément de fixation comprend une rotule sphérique de fixation.

Selon une réalisation possible, la rotule sphérique de fixation est de forme et de dimensions adaptées pour attacher le corps principal à l'accessoire de tête, cet accessoire de tête comprenant dans ce cas un logement ou un réceptacle adapté pour accueillir au moins en partie la rotule sphérique pour fixer solidairement la lunette à l'accessoire de tête.

Par exemple, la rotule sphérique définit un embout « mâle » ayant la forme d'une bille adaptée pour coopérer avec un réceptacle, un logement ou encore un coupleur chacun dit « femelle » de l'accessoire de tête, avec une forme et des dimensions proches de celles de l'embout « mâle » de la rotule.

La présence de cette rotule permet d'ajouter un degré de liberté au mouvement de la lunette et du module optique, facilitant l'alignement et le positionnement du module optique par rapport au champ de vision de l'utilisateur. De plus, elle offre la possibilité de retirer facilement la lunette du champ de vision de l'utilisateur lorsque celle-ci n'est plus utilisée, sans pour autant nécessiter de la démonter entièrement.

Par définition, une rotule sphérique permet une rotation de 360° autour de son axe principal, ce qui offre une grande liberté de mouvement dans toutes les directions, permettant ainsi des ajustements angulaires dans plusieurs plans. En pratique, le réceptacle adapté pour accueillir en partie la rotule sphérique de fixation comprend de préférence une demi-sphère creuse, ce qui permet une rotation de 180° dans chaque plan à partir de sa position centrale, offrant ainsi une grande flexibilité pour ajuster et orienter l'appareil selon les besoins spécifiques de l'utilisateur, améliorant aussi son confort et son efficacité d'utilisation.

Selon un mode de réalisation possible, la rotule sphérique de fixation est adaptée pour coopérer par vissage, clipsage ou insertion avec un coupleur « femelle » tel qu'une aspérité sphérique ou un logement sphérique, situé dans ou sur une surface externe de l'accessoire de tête.

De préférence, ce vissage, ce clipsage ou cette insertion de la rotule sphérique de fixation pour l'accrocher à l'accessoire de tête est réalisé de manière amortie. Un coupleur de l'accessoire de tête peut également être glissé dans le réceptacle, ou simplement « clippé ».

Selon un mode de réalisation possible, la rotule sphérique de fixation est réalisée en une matière plastique injectable.

Outre des tolérances serrées, ceci permet de réduire le poids global du dispositif, et avantageusement dans le cas où le dispositif est porté sur la tête de l'utilisateur pour une durée prolongée. Opter pour une matière plastique injectable permet aussi d'optimiser les propriétés mécaniques, esthétiques, ou encore économiques de la rotule sphérique de fixation.

Selon un mode de réalisation, le circuit de commande est activable sur réception, par l'antenne de communication à distance, d'une requête d'appariement par communication Bluetooth.

Ceci permet à la lunette d'être compatible avec tout dispositif ou tout périphérique externe adapté pour communiquer avec le circuit de commande de la lunette, lui transmettre des informations et/ou contrôler son affichage au moyen d'instructions de commande.

Selon un mode de réalisation possible, l'antenne de communication à distance est configurée pour recevoir des données d'affichage transmises par communication Bluetooth.

Selon un mode de réalisation possible, la communication Bluetooth est une communication Bluetooth à basse énergie.

Dans les présentes, une communication Bluetooth à basse énergie est aussi appelée communication « Bluetooth Low Energy », ou communication « BLE ».

Un autre exemple repose sur l'utilisation de la version 5 de Bluetooth, qui a été publiée en 2019, et offrant des capacités de positionnement améliorées qui permettent aux appareils Bluetooth de déterminer la direction et l'emplacement d'un appareil donné avec une précision de l'ordre du centimètre. Ces capacités sont avantageuses pour l'utilisation de la technologie Bluetooth dans des applications directionnelles, telles que l'utilisation d'une pluralité de lunettes pour afficher des images sur ces appareils réparties sur une zone plus large que celle permise par les versions précédentes de Bluetooth. On peut ainsi contrôler la lunette à partir de n'importe quel appareil électronique doté d'une bonne connectivité Bluetooth, tel qu'un téléphone mobile ou un ordinateur. D'autres connectivités de type Bluetooth 5 sont aussi utilisables pour permettre des débits de données élevés et un streaming vidéo.

Selon un mode de réalisation, le circuit de commande est relié à un élément d'activation de la lunette de réalité assistée qui est disposé sur une surface externe de la lunette de réalité assistée, l'élément d'activation consistant en un seul bouton.

Selon un mode de réalisation possible, le bouton est manipulable par l'utilisateur par pression d'un doigt.

De préférence, l'élément d'activation est étanche et est configuré pour allumer ou éteindre la lunette.

Avantageusement, le bouton est facilement identifiable et ergonomique d'emploi pour l'utilisateur, par exemple en évitant que d'autres boutons ne soient reliés au circuit de commande. En outre, ceci fournit un moyen de contrôle ergonomique et simplifié d'utilisation, puisqu'on évite la présence d'un pavé tactile ou de multiples boutons de commande situé(s) hors du champ de vision de l'utilisateur et non visible(s) par l'utilisateur portant la lunette. La présente d'un seul bouton permet aussi de couvrir une plus grande zone sur la surface externe de la lunette, permettant sa manipulation avec une main gantée, par exemple.

Selon un mode de réalisation possible, est disposé sur une surface externe de la lunette de réalité assistée ou directement sur le circuit de commande au moins une diode électroluminescente.

Ceci permet d'indiquer l'état d'activation de la lunette et/ou l'état de charge de la batterie électrique alimentant la lunette.

Selon un mode de réalisation possible, le module optique est détachable de la tête optique.

Ceci permet une flexibilité dans la maintenance de l'appareil puisqu'on peut remplacer la tête sans affecter le reste du dispositif.

Selon un mode de réalisation possible, la tête optique et/ou le corps principal sont recouverts partiellement ou totalement par un boîtier en plastique.

Ceci permet de fournir une protection légère et résistante aux chocs pour la tête optique et/ou le corps principal, tout en facilitant la fabrication et potentiellement la réduction des coûts de production grâce à l'utilisation de plastique comme matériau pour le boîtier.

Selon un mode de réalisation possible, le corps principal est complètement recouvert par un boîtier en plastique et la tête optique est partiellement recouverte par un boîtier en plastique, c'est-à-dire que toute la tête optique à l'exception du module optique sont recouverts par un boîtier en plastique.

Selon un mode de réalisation, la lunette de réalité assistée comprend en outre un émetteur sonore et/ou un récepteur sonore, l'émetteur sonore et/ou le récepteur sonore étant alimenté(s) par la batterie électrique amovible.

Ceci permet de fournir un moyen de retour sonore destiné à l'utilisateur lorsque dans le cas de l'émetteur sonore. Dans le cas du récepteur sonore, ceci permet à la lunette une utilisation en tant que microphone.

Selon un mode de réalisation, le corps principal comprend au moins un capteur micro-électronique, l'au moins un capteur micro-électronique comprenant au moins un élément choisi sélectionné parmi un accéléromètre tridimensionnel et un capteur gyroscopique.

Ceci permet à la lunette de réalité assistée d'effectuer un suivi de mouvement précis de la tête de l'utilisateur.

Selon un mode de réalisation possible, la batterie est connectée à un circuit électronique configuré pour minimiser l'alimentation électrique, par la batterie, d'au moins un élément choisi parmi l'antenne de communication à distance, le circuit de commande et le module optique, lorsque cet élément n'est pas en fonctionnement continu.

Selon un mode de réalisation possible, le circuit électronique est un microprocesseur interne situé dans le corps principal, de préférence un circuit imprimé, à proximité de la batterie électrique, de sorte à pouvoir être connecté électriquement directement à la batterie électrique.

Selon un mode de réalisation possible, la lunette comprend en outre une jauge d'énergie adaptée pour être reliée à la batterie électrique et au circuit de commande.

Selon un mode de réalisation possible, la batterie électrique comprend la jauge d'énergie, qui est disposée sur une surface externe de la batterie électrique.

Ceci permet de fournir un moyen de surveillance de l'autonomie restante de la lunette de réalité assistée. En particulier, si présente(s), au moins une diode électroluminescente indicatrice de l'état de charge de la batterie peut aussi être reliée au circuit de commande, ce dernier étant configuré pour mesurer avec précision l'état de charge de la batterie et de prendre les mesures nécessaires en fonction de celui-ci. La batterie peut aussi communiquer son autonomie au circuit de commande de la lunette.

Selon un mode de réalisation, l'accessoire de tête est sélectionné parmi un serre-tête, un casque ou une monture de lunettes de vue, un bandeau de tête, un bonnet, ou une casquette, la fixation de l'élément de fixation de la lunette à l'accessoire de tête étant mis en oeuvre avec un élément de réception de l'accessoire de tête.

Ceci permet de choisir le côté de la tête de l'utilisateur, et donc l'oeil de l'utilisateur devant lequel le module optique est positionné tout en gardant le champ de vision de l'autre oeil complètement libre. Le choix d'un accessoire de tête comme étant un serre-tête, un casque ou une monture de lunettes de vue permet à la lunette, et donc au module optique, d'être positionné de manière confortable, stable et solidaire de la tête de l'utilisateur, accompagnant ainsi ses mouvements.

Selon une réalisation possible, le poids de la lunette de réalité assistée est inférieur à 50 grammes.

Ceci permet à l'utilisateur de ne pas subir de fatigue ou de douleur musculaire en cas de port de la lunette et de l'accessoire de tête pendant une durée prolongée, par exemple pendant plusieurs heures.

Il est aussi proposé, selon un autre objet des présentes, un dispositif portable de commande à distance de la lunette de réalité assistée selon l'un quelconque des modes de réalisation précédents, comprenant une interface tactile homme-machine, un émetteur-récepteur et un circuit imprimé électronique, l'interface tactile homme-machine, l'émetteur-récepteur et le circuit imprimé électronique étant alimentés par une batterie interne du dispositif portable de commande, le circuit imprimé électronique étant connecté à l'interface tactile homme-machine et à l'émetteur-récepteur, l'émetteur-récepteur étant configuré pour envoyer des données d'affichage à l'antenne de communication à distance de la lunette de réalité assistée en fonction d'au moins une commande donnée par l'utilisateur à l'interface tactile homme-machine.

Selon un mode de réalisation possible, et lorsque l'antenne de communication à distance est configurée pour recevoir des données d'affichage transmises par communication Bluetooth, de préférence par communication « Bluetooth Low Energy », l'émetteur-récepteur du dispositif portable de commande à distance de la lunette de réalité assistée est aussi configuré pour envoyer les données d'affichage par communication Bluetooth, et de préférence par communication « Bluetooth Low Energy ».

Selon un mode de réalisation possible, l'émetteur-récepteur du dispositif portable de commande à distance est configuré pour recevoir des données par au moins un mode de communication à distance sans fil comme, par exemple, du Wi-Fi, ou du Bluetooth.

Selon un mode de réalisation possible, les données reçues par l'émetteur-récepteur du dispositif portable de commande à distance sont récupérées suite à la lecture d'une étiquette à communication sans fil en champ proche, un terminal mobile, un téléphone portable, un ordinateur, une tablette ou un clavier.

Dans les présentes, une étiquette à communication sans fil est une étiquette de type « NFC » (« Near Field Communication », en anglais), l'envoi des données par cette dernière étant dans ce cas effectué de manière passive. En particulier, la communication en champ proche est un ensemble de protocoles de communication qui permettent la communication entre deux appareils électroniques sur une distance de 4 centimètres ou moins. Ceci offre une connexion à faible vitesse grâce à une configuration simple qui peut être utilisée pour amorcer, passivement ou activement, des connexions sans fil plus performantes. Les téléphones actuels embarquent notamment des antennes fonctionnant en radio-identification de type « RFID » (« Radio Frequency Identification », en anglais) qui, actives, peuvent effectivement communiquer avec une antenne correspondante du dispositif portable.

Selon un mode de réalisation possible, le dispositif portable de commande à distance de la lunette de réalité assistée comprend en outre un émetteur sonore et/ou un récepteur sonore.

Ceci permet d'exempter l'utilisateur portant la lunette de réalité assistée de tout contact direct avec les lunettes, notamment pour toucher le bouton d'activation ou lorsqu'il porte des gants.

Selon un mode de réalisation, le dispositif portable de commande à distance est adapté pour être attaché à l'utilisateur, l'interface tactile homme-machine comprenant un clavier, le clavier comprenant au moins une touche à pression tactile.

Ceci permet à l'utilisateur de pouvoir manipuler le dispositif portable de commande à distance avec l'une de ses mains. En particulier, lorsque le dispositif portable de commande à distance est attaché à l'un de ses poignets, l'utilisateur peut appuyer sur sa ou sur ses touches au moyen de sa main opposée. En outre, au moins une touche est manipulable par un utilisateur dont les mains sont munies de gants, par exemple des gants de protection.

Selon un mode de réalisation possible, le clavier comprend entre 1 et 105 touches à pression tactile, et de préférence neuf touches ou seize touches à pression tactile.

Selon un mode de réalisation possible, le clavier comprend 9 touches tactiles réparties selon 3 lignes et 3 colonnes, 16 touches tactiles réparties selon 4 lignes et 4 colonnes, ou 25 touches tactiles réparties selon 5 lignes et 5 colonnes.

Il est aussi proposé, selon encore un autre objet des présentes, un système de réalité assistée comprenant la lunette de réalité assistée selon l'un quelconque des modes de réalisation précédents et le dispositif portable de commande selon l'un quelconque des modes de réalisation précédents.

Selon un mode de réalisation possible, l'envoi de données d'affichage par l'émetteur-récepteur du dispositif portable de commande à l'antenne de communication à distance de la lunette de réalité assistée se fait au moyen de signaux Bluetooth basse consommation.

Ceci permet de fournir une économie d'énergie maximale et de garantir une durée de vie plus longue à la batterie de la lunette de réalité assistée et/ou à la batterie du dispositif portable de commande. L'utilisation de la lunette en tant qu'appareil secondaire pour tout traitement information et comme appareil principal pour l'affichage à l'utilisateur économise non seulement la batterie de la lunette mais facilite également le fonctionnement sans interruption du circuit imprimé électronique du dispositif portable de commande, qui peut maintenir en permanence un suivi de l'état de la lunette pour autant que la lunette soit à portée de communication du dispositif portable de commande. Ainsi, on exploite efficacement les ressources informatiques et énergétiques du dispositif portable de commande et de la lunette de réalité assistée, cette dernière jouant alors le rôle principal d'affichage tête haute. Ceci permet aussi de limiter l'exposition aux ondes radio au niveau de la tête de l'utilisateur tout en assurant une autonomie de batterie prolongée.

Ceci permet donc aussi d'optimiser la puissance de calcul, de minimiser le poids de la lunette de réalité assistée et de minimiser le chauffage du circuit de commande de la lunette en décentralisant le traitement informatique des données d'affichage dans un appareil externe à la lunette, ici le dispositif portable de commande.

Il est aussi proposé, selon encore un autre objet des présentes, un accessoire de tête adapté pour être attaché à la lunette de réalité assistée selon l'une quelconque des réalisations précédentes, l'accessoire de tête comprenant un élément de réception adapté pour être attaché à la lunette, l'élément de réception étant en outre adapté pour recevoir, par insertion, l'élément de fixation, l'accessoire de tête comprenant en outre un bandeau réglable configuré pour modifier les dimensions de l'accessoire de tête entre une taille minimale et une taille maximale.

Un tel accessoire de tête permet de porter la lunette sur de longues durées sans fatigue, par exemple toute la journée. Le bandeau réglable permet d'adapter le port du serre-tête à toutes les tailles et formes de têtes.

Selon un mode de réalisation possible, l'accessoire de tête comprend un élément de fixation de l'accessoire de tête à un autre accessoire de tête, cet autre accessoire de tête étant choisi parmi un casque, une casquette ou une monture de lunettes de vue.

Ceci permet de fournir un autre moyen d'attache, avec l'avantage de fournir un ajustement encore plus précis de la lunette dans le champ de vision de l'utilisateur, avec la possibilité d'avancer ou de reculer le module optique lorsque l'utilisateur porte un autre accessoire de tête, par exemple un casque de protection.

### Brève description des figures

D'autres caractéristiques, détails et avantages apparaîtront à la lecture de la description détaillée ci-après, et à l'analyse des dessins annexés, comprenant les figures suivantes.
La figure 1 illustre une vue schématique d'un utilisateur portant un système de réalité assistée selon un mode de réalisation de l'invention.
La figure 2 illustre une vue schématique d'une lunette de réalité assistée selon un mode de réalisation de l'invention, lorsque la lunette est montée.
La figure 3 illustre une vue schématique d'une lunette de réalité assistée selon un mode de réalisation de l'invention, lorsque la lunette est démontée.
Les figures 4 et 5 illustrent une vue du dessus ou du dessous d'une lunette de réalité assistée, montrant des rotations de la tête optique par rapport au corps principal dans un plan horizontal de la lunette, selon un mode de réalisation de l'invention.
Les figures 6 et 7 illustrent une vue de côté d'une lunette de réalité assistée, montrant des rotations du module optique par rapport à la tête optique ou au corps principal selon un mode de réalisation de l'invention.
La figure 8 illustre une vue en perspective des rotations possibles d'une lunette de réalité assistée selon un mode de réalisation de l'invention.
La figure 9, respectivement la figure 10, illustre une vue du dessus ou du dessous, respectivement une vue en perspective, d'une lunette de réalité assistée attachée à un accessoire de tête, tel qu'un serre-tête, selon un mode de réalisation de l'invention.
La figure 11 illustre une vue schématique d'un dispositif portable de commande à distance de la lunette de réalité assistée selon un mode de réalisation de l'invention, ce dispositif émettant des signaux électromagnétiques vers un terminal mobile, recevant des signaux électromagnétiques émis par ce terminal mobile, et émettant d'autres signaux électromagnétiques vers la lunette de réalité assistée ou une étiquette à communication sans fil.

Sauf indications contraires, les éléments communs ou analogues à plusieurs figures portent les mêmes signes de référence et présentent des caractéristiques identiques ou analogues, de sorte que ces éléments communs ne sont généralement pas à nouveau décrits par souci de simplicité.

### Description détaillée

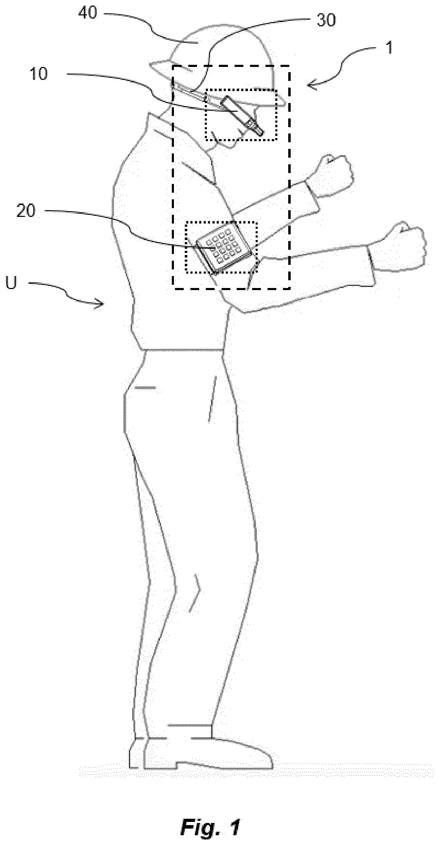

La figure 1 illustre une vue schématique d'un utilisateur portant un système de réalité assistée selon un mode de réalisation de l'invention.

En particulier est représenté un ouvrier de chantier U utilisant un exemple de système de réalité assistée 1 conforme à ce mode de réalisation. Le système 1 comprend la lunette de réalité assistée 10, que l'utilisateur U porte au niveau du côté droit de son visage, par attache de la lunette 10 au casque 40 porté par l'utilisateur U. En variante, l'utilisateur U peut attacher la lunette 10 à un serre-tête 30 porté sous le casque, la lunette 10 pouvant aussi être attachée au serre-tête 30.

Le système 1 comprend en outre un dispositif portable de commande 20 de la lunette, ce dispositif portable de commande étant apparié à la lunette 10 et étant porté, de préférence, au niveau d'un bras, d'un poignet ou d'une main de l'utilisateur U. Ceci permet d'une part d'assurer une distance suffisamment proche pour une communication par signaux Bluetooth de données d'affichage depuis le dispositif 20 vers la lunette 10 et, d'autre part, de faciliter la manipulation de l'interface du dispositif 20 par l'utilisateur au moyen d'une de ses mains, généralement celle opposée au côté où il porte le dispositif 20. Bien entendu, le port de la lunette 10 et du dispositif 20 peut se faire de toute autre manière adaptée, par exemple en attachant le lunette 10 en un point de fixation adaptée d'un couvre-chef de l'utilisateur U, par exemple le casque 40, ou en attachant le dispositif 20 à un vêtement de l'utilisateur U, tel qu'une ceinture ou un pantalon.

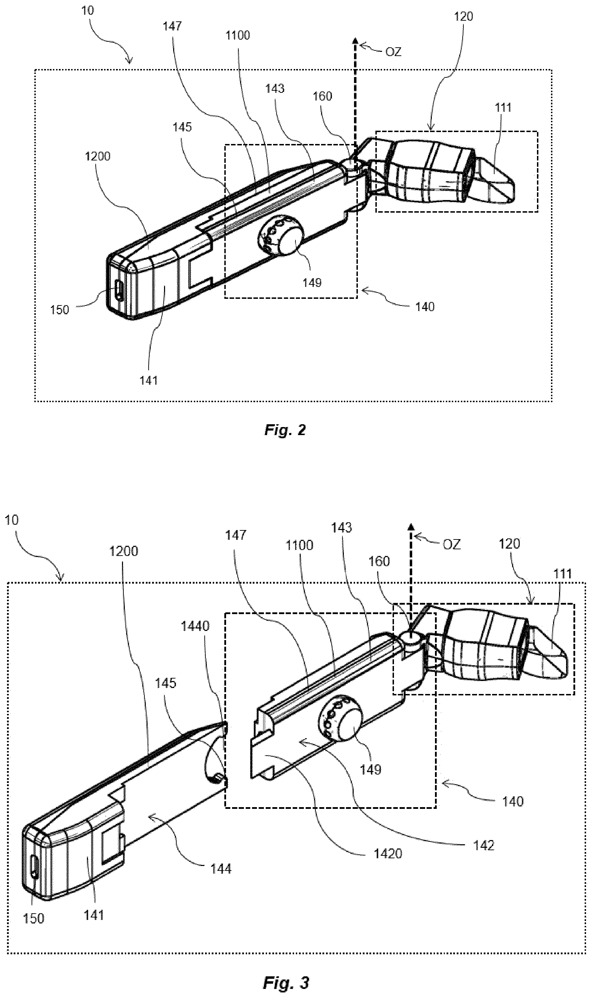

Les figures 2 et 3 représentent chacune une vue en perspective d'un mode de réalisation de la lunette de réalité assistée, lorsque cette lunette est montée dans la figure 2 et lorsque cette lunette est démontée dans la figure 3.

Pour en faciliter la fabrication et l'assemblage, la lunette 10 comprend deux parties dont la tête optique 120 et le corps principal 140. Une articulation 160, qui sera décrite par la suite comme orientée selon un axe vertical, relie la tête optique 120 et le corps principal 140 tout en permettant à la tête optique de pivoter autour de cette articulation 160 et par rapport au corps principal 140.

La tête optique 120 comprend le module optique 111 qui est responsable de l'affichage d'informations graphiques visibles pour l'utilisateur. Les informations graphiques, les instructions d'affichage et de contrôle en général du module optique 111 sont fournies par un circuit de commande 1100 (non visible sur la figure car situé à l'intérieur du corps principal 140) auquel il est relié.

Avantageusement, le circuit de commande 1100 est un circuit imprimé placé à l'intérieur du corps principal 140, de préférence à proximité de l'articulation 160, de sorte qu'on minimise la distance entre le circuit de commande 1100 et le module optique 111, évitant ainsi l'emploi de longues connexions filaires entre les deux éléments, ce qui améliore le poids et l'ergonomie de la lunette 10.

Le module optique 111 est l'élément principal de la lunette 10. Il doit être positionné dans le champ de vision de l'utilisateur U pour permettre un affichage optimal des informations. Le module optique 111 comprend typiquement un prisme en verre sur lequel les informations graphiques sont projetables. Par exemple, le module optique 111 comprend un écran à cristaux liquides, appelé écran LCD (de l'anglais "Liquid Crystal Display" qui signifie "Affichage à Cristaux Liquides"). Dans une variante, l'écran du module optique 111 un écran de type micro-écran OLED (de l'anglais « Organic Light-Emitting Diode », qui signifie « diode électroluminescente organique), avec l'avantage offrent une qualité d'image élevée.

Selon différentes réalisations possibles, la taille de l'écran est au moins celle d'une taille WVGA (ce qui signifie "Wide Video Graphics Array", une norme de résolution d'écran de 800 pixels de largeur par 480 pixels de hauteur). L'écran peut avoir d'autres résolutions, et être sélectionné parmi différents types en fonction de la mise en oeuvre souhaitée de l'invention. L'écran permet par exemple une intensité lumineuse de 1000 à 1500 nits, par exemple 1300 nits, ce qui favorise des conditions d'observation optimales, et facilement contrôlables, en fonction de la luminosité ambiante.

Dans les présentes, un « nit » est une unité de mesure de l'intensité lumineuse qui équivaut à une candela par mètre carré, sa valeur définissant ainsi la luminosité de l'écran LCD pour un oeil humain.

Avantageusement, le module optique 111 et le circuit de commande 1100 sont configurés pour afficher tout type d'images, par exemple des images au format « JPEG » (« Joint Photographic Experts Group » en anglais, un format couramment utilisé pour la compression d'images) ou « PNG » (« Portable Network Graphics » en anglais, un format d'image sans perte de données). Le module optique 111 et le circuit de commande 1100 sont aussi configurés pour afficher tout type de texte, en particulier du texte au format « TTF » (« TrueType Font » en anglais, qui est un format standard de police de caractère pour les ordinateurs).

Pour des raisons de légèreté et d'ergonomie, deux connecteurs électriques flexibles peuvent être intégrés à la lunette 10 pour relier le circuit de commande 1100 au module optique 111.

En utilisation, le circuit de commande 1100 fait office d'interface numérique entre une zone mémoire tampon (ou « frame buffer » en anglais, une zone de mémoire pour stocker temporairement les données d'affichage, non représentée) et l'écran LCD du module optique 111. Ces composants sont reliés, par exemple, par un ou plusieurs connecteurs « FFC » (ou « Flexible Flat Cable » en anglais, c'est-à-dire des câbles plats flexibles). Le pilote d'affichage associé et le connecteur FFC sont de préférence remplaçables, ce qui signifie qu'ils peuvent être désinstallés/retirés et remplacés si nécessaire.

Le circuit de commande 1100 et/ou le module optique 111 comprend généralement une unité micro-contrôleuse, qui est configurée pour gérer la zone mémoire tampon et la transmission des informations graphiques. L'interface entre l'unité micro-contrôleuse et le circuit de commande 1100 sont responsables du contrôle de l'affichage.

Pour leur fabrication, la tête optique 120 et le corps principal 140 sont chacun recouverts en partie par un revêtement en plastique, ou du moins, contenus partiellement dans un boîtier en plastique assurant la protection de leurs composants.

Bien que les composants de la lunette 10 eux-mêmes sont conçus pour résister à des impacts accidentels, un revêtement ou un boîtier en plastique permet de protéger la lunette de chocs de faible à moyenne intensité, par exemple une chute de 2 mètres de haut ou des vibrations de faible à moyenne fréquence, par exemple des vibrations dues au mouvement d'un cycliste sur une route, ce cycliste portant la lunette 10, ou telles que celles engendrées par les mouvements du corps de l'utilisateur U lorsqu'il est en mouvement. Les composants électroniques et mécaniques de la lunette 10 sont de préférence fixés de manière sécurisée pour éviter tout dommage ou toute panne due à des vibrations.

Ceci permet aussi à la lunette 10 d'être utilisée dans un large éventail de conditions, y compris en extérieur, par exemple en cas d'exposition à des températures extrêmes allant de - 20°C à 55°C. Ainsi, la conception de la lunette 10 prend en compte cette plage de températures pour garantir une performance et une fiabilité optimales, même dans des conditions extrêmes, sans surchauffe ni panne. En outre, le revêtement ou le boîtier en plastique de la lunette 10 sont de préférence prévus avec une étanchéité prévenant l'infiltration d'eau.

Le corps principal 140 de la lunette 10 comprend en outre un élément de fixation 149 pour attacher le corps principal 140 à un accessoire de tête, et qui comprend de préférence une rotule sphérique de fixation adaptée pour venir s'engager dans un réceptacle correspondant et situé sur ou dans l'accessoire de tête.

L'articulation 160, dont l'axe principal est orienté verticalement, joint la tête optique 120 au corps principal 140 de manière rotative et permet de modifier l'orientation du module optique dans un plan horizontal, donc autour d'un axe vertical du corps principal 140.

Selon différents modes de réalisation possibles, cette articulation 160 est tout type d'articulation permettant la rotation de la tête 120 rapport au corps 140, tel qu'une articulation à vis, une articulation à ressort, une articulation à friction, une articulation magnétique voire une articulation à encliquetage.

Le corps principal 140 de la lunette 10, ou le circuit de commande 1100 directement, comprend une antenne de communication à distance 143 (non visible sur la figure car situé à l'intérieur du corps principal 140) connectée mécaniquement et électriquement au circuit de commande 1100. Le rôle de l'antenne de communication à distance 143 est de recevoir des données et/ou des instructions d'affichage depuis un terminal externe, en particulier depuis le dispositif portable de commande à distance 20.

Dans un mode de réalisation possible et avantageux, l'antenne de communication à distance 143 est directement intégrée à ou dessinée dans le circuit de commande 1100. Ceci permet de maximiser la portée et la qualité du signal.

Le circuit de commande 1100, et plus généralement les composants électroniques de la lunette 10, sont alimentés par toute source d'énergie adaptée. Le corps principal 140 de la lunette 10 comprend ainsi un logement prévu pour accueillir une batterie électrique 141. En utilisation, le corps principal 140 comprend cette batterie électrique 141, qui permet d'alimenter électriquement les différents composants électroniques de la lunette 10, en ce comprenant l'antenne de communication à distance 143, le circuit de commande 1100, le module optique 111 et tous leurs composants.

Dans un mode de réalisation possible, la capacité de la batterie électrique 141 est comprise entre 300 à 12000 milliampères-heure (mAh), par exemple 520 mAh. La batterie électrique 141 présente un format permettant un remplacement rapide dans le corps principal 140.

L'exemple ci-dessus permet d'obtenir une autonomie moyenne de quatre heures pour l'utilisation de la lunette 10 lorsqu'elle est en fonctionnement. Bien que la consommation d'énergie de la lunette 10 dépende surtout des ressources consommées lors du fonctionnement du circuit de commande 1100, la consommation d'énergie de celui-ci peut être optimisée par la mise en oeuvre préprogrammée d'un état de veille ou d'un état de désactivation de la lunette 10 en cas d'absence d'utilisation pendant une durée de temps prédéterminée.

Concernant la batterie électrique 141, l'utilisation d'au moins un connecteur USB-C est préférée, notamment pour des raisons de programmation, lorsque la lunette est assemblée et que le ou les boîtiers en plastique sont scellés. Ce connecteur permet une connexion aisée à un ordinateur et prend en charge des débits de données élevés. L'utilisation de l'USB-C garantit également la compatibilité avec les appareils les plus récents.

Pour assurer une alimentation efficace et fiable, le circuit de commande 1100 comprend une carte électronique connectable via un connecteur USB-C. Son alimentation peut dans ce cas aussi être fournie par une batterie externe ou par un port USB-C d'un ordinateur pour la programmation ou l'échange de données. En ce qui concerne les différentes tensions d'alimentation, la carte électronique est équipée, de préférence, d'un circuit de protection contre les surtensions afin de garantir la sécurité de l'appareil et la longévité de la carte électronique.

Selon un mode de réalisation possible, le corps principal 140 comprend, en une extrémité du corps principal 140 située d'un côté opposé à celui de l'articulation 160, une entrée/sortie 150 pour un connecteur électrique, par exemple pour connecteur USB-C, permettant de recharger la batterie électrique 141, de télécharger des données depuis/dans le circuit de commande 1100, ou de télécharger des données depuis/dans le circuit électronique 1200.

En complément du circuit de commande 1100, le corps principal 140 comprend, selon un mode de réalisation possible, un circuit électronique 1200 connecté électriquement au circuit de commande 1100, et alimenté électriquement par la batterie électrique 141. Le circuit de commande 1100 peut aussi avoir pour rôle d'optimiser le fonctionnement de la batterie électrique 141, et en particulier la manière d'alimenter les éléments tels que l'antenne de communication 143 ou encore les composants du module optique 111.

Le corps principal 140, ou directement le circuit de commande 1100, peut comprendre au moins un capteur micro-électronique 145, par exemple un accéléromètre tridimensionnel ou un capteur gyroscopique. Un tel accéléromètre tridimensionnel est de préférence un capteur micro-électronique « MEMS » (ou « Micro-Electro-Mechanical System », en anglais) à faible consommation d'énergie, alimenté par la batterie électrique 141, et capable de mesurer une accélération dans les trois directions de l'espace, ce qui signifie qu'il peut détecter les mouvements du corps principal 140, et donc de la lunette 10, dans toutes les directions. De même, un capteur gyroscopique peut mesurer l'orientation et la rotation de l'appareil.

Selon un mode de réalisation possible, le capteur micro-électronique 145 est relié au circuit de commande 1100 et est configuré pour détecter différents types de mouvement du corps principal 140. Le capteur 145 peut en outre être avantageusement configuré pour implémenter, avec le circuit de commande 1100 et/ou la batterie électrique 141, différentes fonctionnalités, telles qu'une fonctionnalité de réveil en cas de mouvement depuis un état de repos de la lunette 10, une fonctionnalité d'inclinaison de l'affichage au niveau du module optique 111 ou encore une fonctionnalité de protection en cas de détection d'une chute. Outre la prise de mesures de sécurité, ceci permet aussi d'optimiser la consommation électrique des composants de la lunette 10 en fonction des situations dans lesquelles elle est utilisée.

Par exemple, le circuit de commande 1100 ou un microcontrôleur de celui-ci est configuré pour traiter toute information provenant de ce(s) capteur(s) micro-électronique « MEMS » et d'imposer (ou retirer) un état de veille ou de désactivation lorsque cela est nécessaire.

Selon un mode de réalisation possible, mais non représenté, une surface externe de la lunette 10 comprend au moins un élément d'activation, par exemple un bouton d'allumage ou d'extinction de la lunette 10, configuré pour mettre sous tension la lunette 10 par une simple pression de doigt. L'au moins un élément d'activation peut aussi être un microphone commandable vocalement par un utilisateur U, et s'accompagner de diodes électroluminescentes dont l'allumage et la couleur peuvent renseigner l'utilisateur U de l'état de la lunette 10. Ces états peuvent par exemple comprendre un état de charge, un état de manque d'énergie de la batterie 141, un état d'allumage ou encore un état de connexion par Bluetooth à un dispositif distant.

Selon un mode de réalisation possible, au moins une surface externe de la lunette 10 comprend une jauge (non représentée), reliée à la batterie électrique 141, au circuit de commande 1100 et/ou au circuit électronique 1200, et configurée pour fournir à un utilisateur U une indication visuelle du niveau de charge de la batterie électrique 141.

Selon un mode de réalisation possible, le corps principal 140 comprend un émetteur sonore 147 et/ou un récepteur sonore (non représenté), cet émetteur sonore 147 et/ou ce récepteur sonore étant connecté(s) électriquement à la carte principale 1100.

La présence d'un émetteur sonore 147 permet de fournir un moyen supplémentaire d'interaction avec la lunette, par exemple un haut-parleur ou un buzzeur émettant un son indiquant l'affichage d'informations par le module optique 111 ou le défaut de charge de la batterie 141. La présence d'un récepteur sonore (non représenté), par exemple un microphone, permet à la lunette d'être capable de détecter les sons de son environnement et, éventuellement, de renvoyer le signal audio capté via Bluetooth pour traitement par un appareil externe. La lunette 10 peut ainsi faire office de moyen de communication audio pour l'utilisateur U, auquel cas le récepteur sonore comprend de préférence un circuit électronique intégré à faible consommation et configuré pour mettre en oeuvre un traitement de signaux audio via une interface adaptée. En particulier, ceci permet à la lunette 10 de pouvoir faire afficher par le module optique 111 des informations sur commande vocale, avec une faible consommation d'énergie, une taille compacte et une qualité audio suffisante pour une utilisation en extérieur.

Selon un mode de réalisation possible et comme illustré sur la figure 3 montrant une version détachée de la lunette 10, le corps principal 140 est séparable en plusieurs parties, par exemple deux parties 144 et 142, la première partie 142 étant reliée à la tête optique 120 au moyen de l'articulation 120. La première partie 142 du corps principal 140 comprend le circuit de commande 1100 lui-même relié au module optique 111, tandis que la deuxième partie 144 comprend le circuit électronique 1200 configuré pour contrôler la gestion et l'alimentation de la batterie électrique 141.

Dans ce mode de réalisation possible, la première partie 142 se fixe à la deuxième partie 144 au moyen d'une ou de plusieurs paires d'attaches mâle-femelle 1420 et 1440, par exemple une ou plusieurs associations 1420 d'attaches mâle-femelle située(s) en une extrémité de la première partie 142, cette extrémité étant opposée à celle située du côté de l'articulation 160, et une ou plusieurs associations 1440 correspondantes d'attaches mâle-femelle située(s) en une autre extrémité de la deuxième partie 144.

On peut retrouver, au niveau de la fixation d'attaches mâle-femelle 1420 et/ou 1440, les connexions électriques entre la batterie électrique 141 et le circuit de commande 1100 et/ou, lorsque le circuit électronique 1200 est présent, entre le circuit électronique 1200 et le circuit de commande 1100. Ces connexions électriques comprennent de préférence un connecteur, par exemple un connecteur USB-B ou USB-C, permettant de relier directement deux circuits imprimés lorsque la première partie 142 est fixée à la deuxième partie 144.

Ceci permet de fournir dispositif de réalité assistée dont le corps principal 140 est démontable en deux parties 142 et 144, facilitant ainsi la manutention ou la configuration de la deuxième partie 144 comprenant la batterie électrique 141 et le circuit électronique 1200 responsable de la gestion de l'alimentation électrique dans la lunette 10.

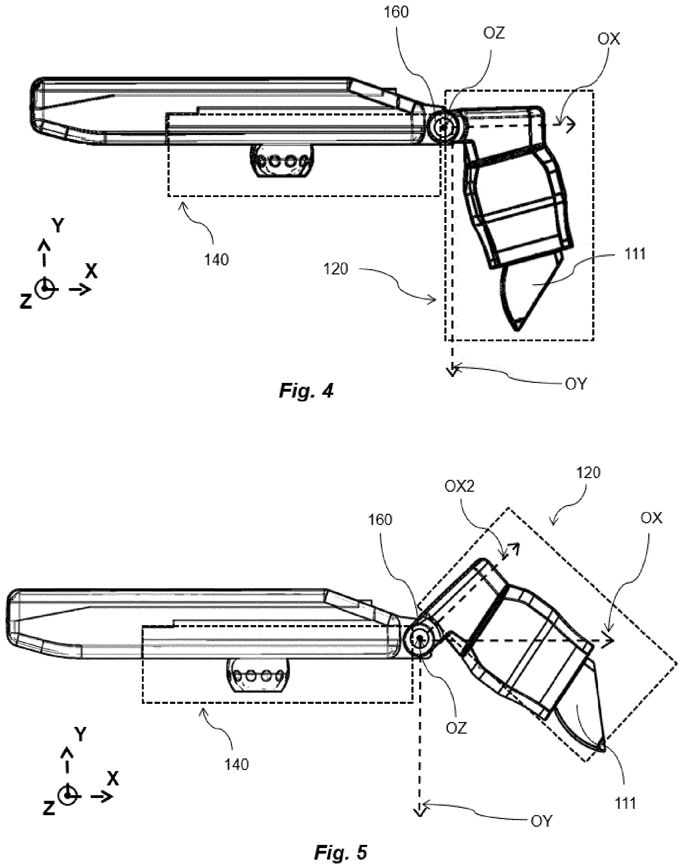

Les figures 4 et 5 montrent un mode de réalisation de la lunette de réalité assistée 10 suivant une vue du dessus ou du dessous, illustrant des limites de la rotation possible de la tête optique 120 par rapport au corps principal 140, dans un plan horizontal de la lunette et autour d'un premier axe, ce premier axe étant un axe vertical sensiblement perpendiculaire à ce plan horizontal.

Pour la suite de la description, on comprendra que le corps principal 140 de la lunette de réalité assistée 10 peut s'assimiler sensiblement à un parallélépipède rectangle, dont les côtés définissent un repère orthogonal XYZ selon les directions X, Y et Z, qui correspondent dans ce cas respectivement à l'axe de longueur selon X du corps principal 140, à l'axe de largeur selon Y du corps principal 140 et à l'axe de hauteur selon Z corps principal 140. Les axes de longueur, de largeur et de hauteur sont chacun perpendiculaires entre eux. De même, le plan horizontal de la lunette 10 est défini comme étant le plan comprenant l'axe de longueur selon X et l'axe de largeur selon Y. Ce plan horizontal XY correspondrait à un plan horizontal par rapport au sol pour un utilisateur U en position debout. On comprendra cependant que la lunette de réalité assistée 10 ne doit pas nécessairement être orientée parallèlement au plan horizontal pour pouvoir fonctionner ou être utilisée.

Comme illustré, la longueur du corps principal 140 définit un axe horizontal principal OX du corps principal 140, cette longueur étant, dans le cas présent, alignée le long de la plus grande dimension de la lunette 10. Perpendiculaire à cet un axe horizontal principal OX, est défini un axe horizontal optique Y du module optique 120, les axes horizontaux principaux OX et OY étant perpendiculaires entre eux et étant tous les deux compris dans le plan horizontal défini par les directions X et Y.

Comme illustré, un axe vertical principal OZ, aussi appelé axe vertical optique, aligné selon la direction Z, est perpendiculaire au plan horizontal formé par les directions X et Y, et traverse celui-ci au niveau de l'articulation 160. Les axes OX, OY et OZ ont même origine et sont tous perpendiculaires deux à deux, de sorte que l'axe horizontal principal de la tête optique 120 et l'axe horizontal principal du corps principal 140 sont situés dans le plan horizontal.

Comme illustré, et selon un mode de réalisation possible, la tête optique 120 est pivotable en rotation dans le plan horizontal, en tournant celle-ci par rapport au corps principal 140 autour de l'axe vertical principal OZ et plus précisément autour de l'articulation 160 qui permet cette rotation. L'orientation de la tête optique 120 dans le plan horizontal XY peut être définie par un axe horizontal virtuel OX2 définissant un angle dans le repère XYZ, cet angle étant égal à 0° lorsque l'axe OX2 est parallèle à et orienté dans le même sens que OX.

Selon une réalisation avantageuse de l'invention, l'articulation 160 restreint la rotation de la tête optique 120 dans un premier intervalle d'angles définis entre l'axe horizontal virtuel OX2 et l'axe horizontal principal OX. En particulier, la tête optique 120 est pivotable par rapport au corps principal 140 autour de l'axe OZ par un angle, appelé premier angle ou angle de lacet, et dont la valeur est sensiblement comprise entre -40° et +40°, entre -15° et +40°, entre -40° et +15° ou encore entre -15° et +15°, lorsque mesuré par rapport à OX et autour de OZ.

Dans les présentes, on entend qu'une valeur angulaire « sensiblement égale à » est une valeur angulaire « égale à » à plus ou moins 1° de précision près. En outre, une valeur positive de l'angle de lacet signifie que l'axe horizontal virtuel OX2 est situé dans le plan horizontal et dans le quadrant défini par OX et OY.

Par exemple, un élément de blocage de l'articulation 160 permet d'empêcher la rotation de l'axe horizontal virtuel OX2, et donc de la tête optique 120, au-delà de ces valeurs.

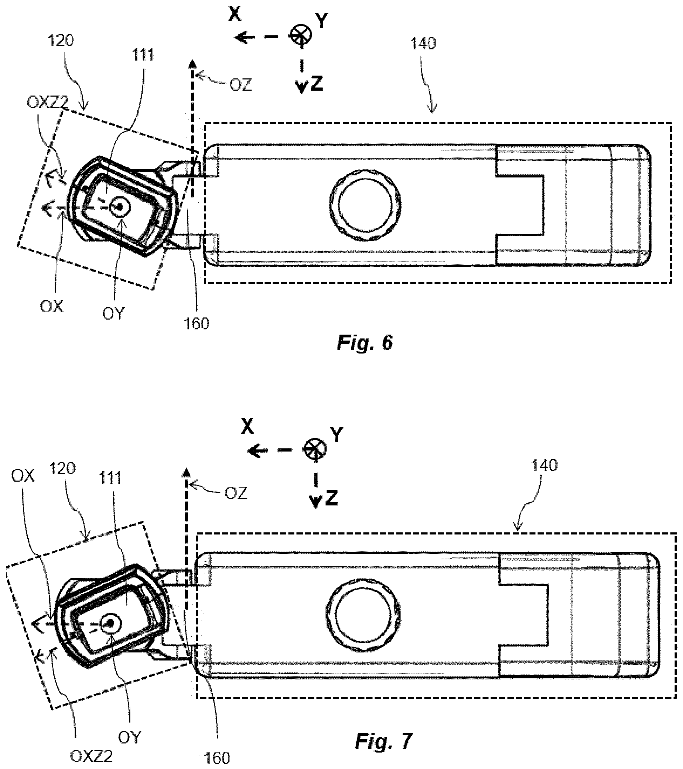

Les figures 6 et 7 montrent une vue de côté d'une lunette de réalité assistée, illustrant les limites de la rotation possible du module optique 111 par rapport à la tête optique 120 et, en particulier, par rapport au plan horizontal précédemment défini comme comprenant la longueur du corps principal 140 selon la direction X et la largeur du corps principal 140 selon la direction Y.

Comme illustré, le module optique 111 est pivotable indépendamment de la tête optique 120 autour d'une autre articulation (non représentée) que comprend la tête optique 120. Cette autre articulation est distincte de l'articulation 160 joignant la tête optique 120 au corps principal 140. Le module optique 111 peut ainsi être orienté à volonté selon différents angles horizontaux par rapport au champ de vision normal d'un utilisateur U en position debout. En particulier, le module optique 111 peut être tourné autour d'un axe horizontal OY qui est compris dans le plan horizontal XY, cet axe horizontal OY étant perpendiculaire à l'axe horizontal OX précédemment décrit.

L'orientation du module optique 111 peut donc être modifiée dans un plan vertical défini par les directions X et Z, ce plan vertical étant perpendiculaire au plan horizontal défini par les directions X et Y. Cette orientation peut aussi être définie par un axe oblique virtuel OXZ2, celui-ci définissant un angle dans le repère XYZ, cet angle étant égal à 0° lorsque l'axe OXZ2 est parallèle à et est orienté dans le même sens que OX.

Selon une réalisation possible de l'invention, cette autre articulation (non représentée) restreint la rotation du module optique 111 dans un deuxième intervalle d'angles définis entre l'axe oblique virtuel OXZ2 et l'axe horizontal principal OX. En particulier, le module optique 111 est pivotable par rapport au plan horizontal, et donc par rapport à la tête optique 120, autour de l'axe OY par un angle, appelé deuxième angle ou angle de roulis, et dont la valeur est sensiblement comprise entre -25° et +25° lorsque mesuré par rapport à OX et autour de OY. Dans les présentes, une valeur négative de l'angle de roulis signifie que l'axe oblique virtuel OXZ2 est situé dans le plan vertical et dans le quadrant défini par OX et OZ.

Par exemple, un autre élément de blocage permet d'empêcher la rotation de l'axe oblique virtuel OXZ2, et donc du module optique 111, au-delà de ces valeurs. Le mouvement du module optique est ainsi limité dans un intervalle proposant une lecture optimale des informations visuelles affichées à l'utilisateur U. Avantageusement, lorsque ces informations visuelles contiennent du texte, ceci permet à l'utilisateur U doit pouvoir lire avec facilité ce texte sans devoir incliner sa tête.

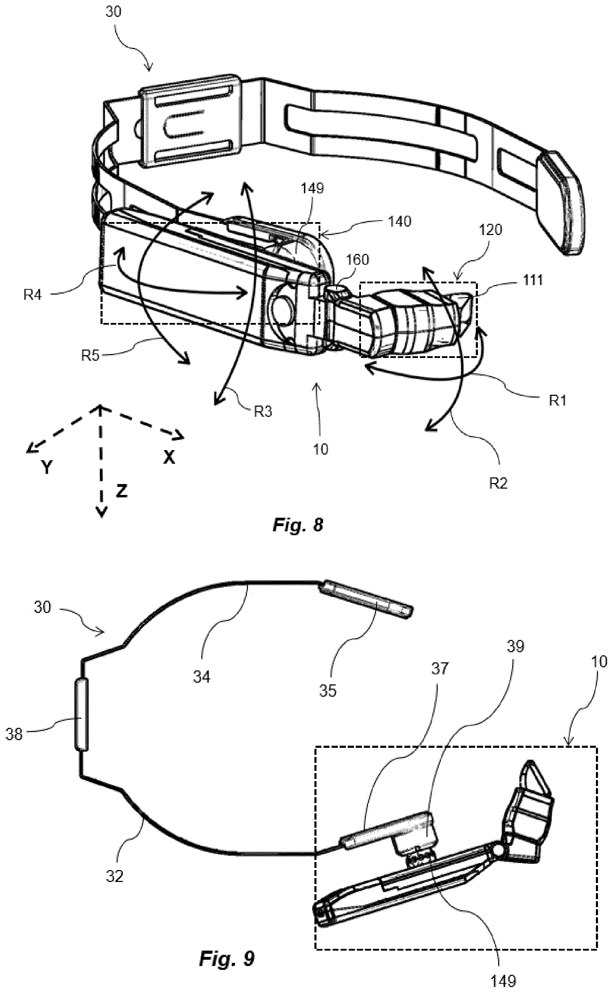

La figure 8 illustre une vue en perspective des rotations possibles des composants de la lunette de réalité assistée selon un mode de réalisation de l'invention, le repère XYZ étant indicatif des directions précédemment décrites.

Comme décrit précédemment, la tête optique 120 est pivotable suivant une rotation « R1 » par rapport au corps principal 140 et autour de l'articulation 160, équivalente à une rotation autour de la direction verticale selon Z. Selon un mode de réalisation possible, l'articulation 160 est adaptée pour restreindre l'angle de rotation « R1 », appelé angle de lacet, à un intervalle de valeurs comprises entre -15° et +40°, l'angle de lacet étant de 0° lorsque l'axe horizontal principal de la tête optique 120 et l'axe horizontal principal du corps principal 140 sont perpendiculaires entre eux.

Comme décrit précédemment, le module optique 111 est pivotable suivant une rotation « R2 » par rapport à la tête optique 120 et autour d'une autre articulation (non visible), équivalente à une rotation autour de la direction horizontale selon Y. Selon un mode de réalisation possible, cette autre articulation (non visible) est adaptée pour restreindre l'angle de rotation « R2 », appelé angle de roulis, à un intervalle de valeurs comprises entre -25° et +25°, l'angle de lacet étant de 0° lorsque l'axe principal du module optique 111 est sensiblement perpendiculaire au premier axe, c'est-à-dire lorsque l'axe principal du module optique 111 est sensiblement perpendiculaire à la direction horizontale selon X.

Selon des modes de réalisation possibles, et comme illustré, lorsque la lunette 10 est attachée à un accessoire de tête tel qu'un serre-tête 30, la lunette 10 est déplaçable selon trois autres degrés de liberté, ici trois rotations « R3 », « R4 » et « R5 ». Dans le premier cas, pour la rotation « R3 », le corps principal 140 peut pivoter en rotation autour de la direction horizontale selon Y grâce au mouvement relatif de la lunette 10 autour de l'élément de fixation 149 attachant le corps principal 140 à l'accessoire de tête 30. Dans le deuxième cas, pour la rotation « R4 », la lunette 10 peut pivoter en rotation autour de la direction verticale selon Z grâce à la flexibilité du serre-tête 30, celui-ci étant adapté pour être suffisamment déformable que pour s'adapter à différentes dimensions de tête d'utilisateur U. Dans le troisième cas, pour la rotation « R5 », la lunette 10 peut pivoter en rotation autour de la direction horizontale selon X au moyen d'un ajustement manuel du serre-tête 30 par l'utilisateur autour de sa tête. On fournit ainsi au moins cinq types de mouvement de la lunette 10, du corps principal 140 et/ou du serre-tête 30 pour un positionnement facile et adaptable de la tête optique 120 ou du module optique 111 devant un oeil de l'utilisateur U.

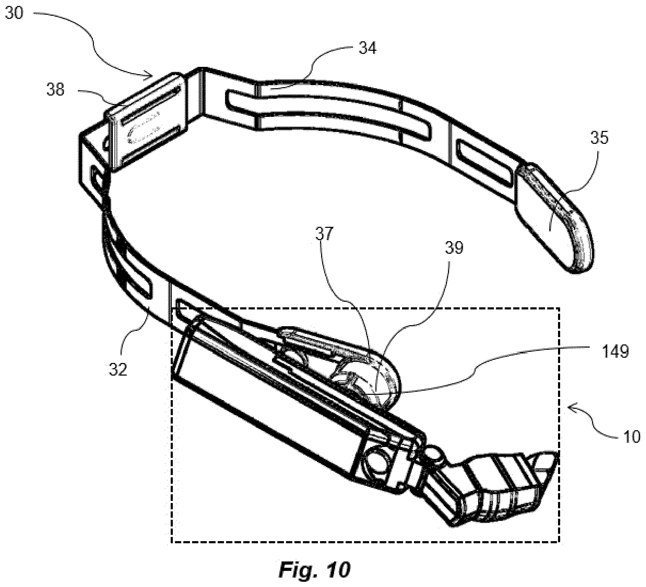

La figure 9 illustre une vue du dessus (ou du dessous) d'une lunette de réalité assistée attachée à un serre-tête selon un mode de réalisation de l'invention tandis que la figure 10 en illustre une vue en perspective.

Comme illustré, la lunette de réalité assistée 10 est conforme à celles décrites dans les modes de réalisations précédents. En particulier, la lunette 10 comprend un élément de fixation 149 adapté pour attacher la lunette 10 à un accessoire de tête 30 et, dans le cas particulier présent, à un serre-tête 30. L'attache de la lunette 10 au serre-tête se fait en engageant de manière solidaire l'élément de fixation 149 à un élément de réception 39, faisant office de réceptacle et situé sur un côté du serre-tête 30.

L'accessoire de tête 30 est, par exemple, un serre-tête flexible prévu pour être accroché horizontalement autour de la tête de l'utilisateur U. Comme illustré, le serre-tête 30 forme une structure allongée et élastiquement déformable dans un plan horizontal, ce qui lui permet de s'adapter à différentes tailles de tête. Cette structure comprend typiquement une branche droite 32 et une branche gauche 34 venant se placer au-dessus d'une oreille respective de l'utilisateur U.

Selon un mode de réalisation possible, le serre-tête 30 comprend en outre des moyens de maintien 35 et 37 à la tête d'un utilisateur U, par exemple des coussinets ou des rembourrages, et positionnés à l'intérieur de chaque extrémité des branches 32 et 34 de la structure du serre-tête 30, pour maintenir confortablement celui-ci en position horizontale autour de la tête de l'utilisateur U.

Selon un mode de réalisation possible, l'élément de réception 39 du serre-tête 30 qui permet d'accrocher l'élément de fixation 149 de la lunette 10 est situé en une extrémité extérieure de l'une des branches 32 ou 34, du côté opposé au moyen de maintien 35 ou 37 correspondants.

Selon un mode de réalisation possible, le serre-tête 30 est réalisé en acier inoxydable. Une conception symétrique horizontale offre une flexibilité idéale pour faciliter le positionnement de la tête optique devant l'un des yeux de l'utilisateur U portant le serre-tête 30. De plus, ceci permet à l'utilisateur U de facilement choisir l'œil devant lequel le module optique 111 est positionné, devant l'oeil gauche ou droit, simplement en retournant le serre-tête 30 par rapport au plan horizontal.

Selon un mode de réalisation possible, le serre-tête est équipé d'un élément de réglage 38, par exemple un bandeau de serrage, offrant une pluralité de tailles différentes, par exemple trois tailles (petite, moyenne et large), chaque définissant une distance correspondante séparant les branches 32 et 34 l'une de l'autre. Ceci permet aux utilisateurs de sélectionner un port confortable et adapté du serre-tête aux différentes morphologies de tête possibles.

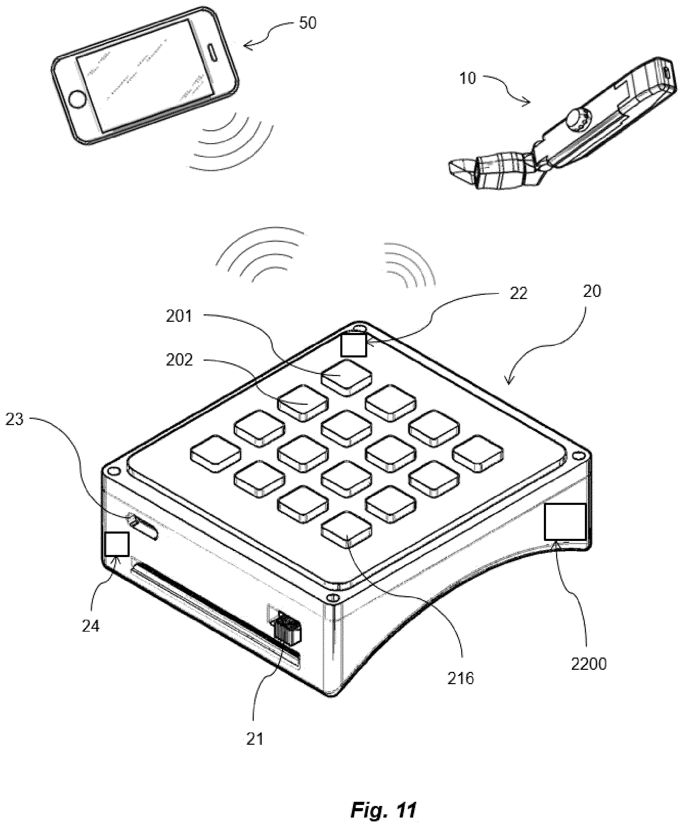

La figure 11 illustre une vue schématique d'un dispositif portable de commande à distance de la lunette de réalité assistée selon un mode de réalisation de l'invention. Est également illustré un terminal mobile, configuré pour communiquer avec le dispositif au moyen de signaux électromagnétiques, ainsi qu'une étiquette à communication sans fil en champ proche.

En particulier, le dispositif portable de commande à distance 20 est configuré pour émettre des signaux électromagnétiques vers le terminal mobile 50, pour recevoir des signaux électromagnétiques émis par ce terminal mobile 50, et/ou pour émettre d'autres signaux électromagnétiques vers la lunette de réalité assistée 10, en particulier des signaux Bluetooth. Le terminal mobile 50 est par exemple une tablette ou un téléphone mobile.

Dans un exemple non représenté, le dispositif portable de commande à distance 20 est configuré pour émettre des signaux électromagnétiques vers un terminal qui n'est pas mobile, par exemple un serveur de données (non représenté), celui-ci permettant la récolte de données au cours du temps. En particulier, ceci peut être mis en oeuvre dans le cadre d'un matériel et/ou d'un logiciel de planification de ressources d'entreprise, aussi appelé « passerelle ERP » (ou « bridge ERP », en anglais), pour faciliter la gestion d'opérations dans celle-ci. On peut ainsi collecter des données sur le terrain puis les transmettre de manière sans fil à la « passerelle ERP ». On assure ainsi la synchronisation et la consolidation des informations récoltées, ce qui permet aux entreprises d'optimiser leurs processus opérationnels et d'améliorer leur efficacité globale.

Le dispositif portable de commande à distance 20 est aussi configuré pour émettre des signaux électromagnétiques vers une étiquette à communication sans fil en champ proche 60 et détecter celle-ci.

Comme illustré dans cet exemple, et de manière non limitative, le dispositif portable de commande à distance 20 comprend une interface tactile homme-machine, ici un clavier à seize touches 201, 202, ... 216 qui sont réparties en 4 lignes et 4 colonnes. Ceci fournit une interface tactile homme-machine efficace et ergonomique d'emploi pour un utilisateur U, en particulier si ce dernier porte des gants. Les commandes associées aux touches peuvent générer des changements préprogrammés de l'affichage sur la lunette 10.

Bien que non représentée, une interface du dispositif portable de commande 20 peut combiner des entrées tactiles via le clavier et des entrées vocales, en intégrant en outre dans le dispositif 20 un microphone et/ou un haut-parleur fournissant des sorties auditives.

Le dispositif 20 comprend en outre un circuit imprimé électronique 2200 ainsi qu'un émetteur-récepteur 22 reliés à l'interface tactile homme-machine. Ces différents composants sont tous alimentés par une batterie interne 24, qui peut être remplacée ou rechargée au moyen d'un connecteur électrique 23 adapté à cet effet.

En particulier, dans le présent exemple illustré, le circuit imprimé électronique 2200 est connecté au clavier à seize touches 201, 202, ... 216 dont la manipulation, par exemple, permet à l'utilisateur de choisir l'une parmi seize possibilités de visualisation de données d'affichage par la lunette 10. Un tel clavier, qui peut être manipulé sans le regarder, permet à l'utilisateur U de rester concentré sur sa tâche, tout en bénéficiant d'un feedback audio si le dispositif 20 est en outre muni d'un haut-parleur.

De préférence, l'émetteur-récepteur 22 comprend une antenne adaptée pour communiquer avec l'antenne de communication 143 du dispositif 10 par des signaux Bluetooth et, en option, une antenne wifi permettant une communication entre le dispositif 20 et un terminal mobile 50, notamment un téléphone mobile. Tout autre mode de communication est envisageable pour autant qu'il permette la commande de la lunette 10 au moyen du dispositif 20. En d'autres termes, l'émetteur-récepteur 22 est configuré pour envoyer des données d'affichage par Bluetooth à l'antenne de communication à distance 143 de la lunette de réalité assistée 10, en fonction d'au moins une commande donnée par l'utilisateur U à l'interface tactile homme-machine 201, 202, ..., 216. On notera que le dispositif peut aussi comprendre un autre type d'interface, par exemple une interface vocale, visuelle, sonore, etc. Dans une réalisation possible, l'émetteur-récepteur 22 comprend aussi une antenne adaptée pour communiquer avec l'étiquette à communication sans fil 60.

Différentes méthodes de transfert de données peuvent être utilisées entre le dispositif 20 et le terminal mobile 50, ou entre le dispositif 20 et un ordinateur (non représenté). Par exemple, des signaux Bluetooth sont échangeables à distance entre le dispositif 20 et la lunette 10 ou entre le dispositif 20 et le terminal mobile 50 au moyen de l'émetteur-récepteur 22, tandis qu'une connexion filaire via un connecteur 23 de type USB-C peut être mise en oeuvre entre le dispositif 20 et un ordinateur externe afin, par exemple, de programmer le dispositif portable de commande 20.

Selon un mode de réalisation possible, les signaux Bluetooth émis et reçus par le dispositif portable de commande 20 utilisent tout type de technologie BLE 5.x pour communiquer avec la lunette de réalité assistée 10, avec une consommation d'énergie minimale, économisant de ce fait la batterie 24 du dispositif portable de commande.

Selon un mode de réalisation possible, et afin de permettre un port léger, facile et ergonomique du dispositif portable de commande 20, celui-ci comprend un orifice adapté pour faire passer un élastique, une lanière ou tout type de moyen d'accrochage adapté au bras ou à la main d'un utilisateur.

Au regard des différents objets des présentes qui ont été décrits précédemment, des tests ont permis de montrer et/ou de confirmer que plusieurs caractéristiques décrites ci-dessus de manière explicite ou implicite, permettent d'obtenir des effets techniques surprenants et avantageux, comme décrit ci-dessous.

Dans un exemple, il a été constaté qu'une batterie électrique amovible 141 connectée à la lunette 10 et dont la capacité est comprise entre 300 à 12000 milliampères-heure permet de mettre en oeuvre une lunette de réalité assistée d'un poids inférieur à 50 grammes, poids de la batterie inclus. Avantageusement et de manière surprenante, ceci permet notamment :
- une utilisation de longue durée grâce à l'autonomie de la batterie, tout en évitant un effort prolongé pour le porteur, qui peut ainsi porter le système confortablement pendant un ou deux cycles d'utilisation de quatre heures, sans ressentir de fatigue liée au poids de la lunette, et
- une installation de la lunette et un changement de la batterie amovible extrêmement rapide, car la batterie est interchangeable et située à l'extérieur du corps principal : le caractère amovible de la batterie permet un changement et une activation très rapide, en moins de 20 secondes. L'allumage de la lunette ne prend lui pas plus d'une seconde, ce qui augmente considérablement l'ergonomie de l'appareil.

Dans un autre exemple, il a été constaté qu'en attachant la lunette de réalité assistée à un accessoire de tête adapté à cet effet et l'activabilité du circuit de commande sur réception, par l'antenne de communication à distance, d'une requête d'appariement par communication Bluetooth permet de mettre en oeuvre une installation et une utilisation très rapides de l'ensemble pour les utilisateurs. Avantageusement et de manière surprenante, ceci permet notamment :
- un système d'attache versatile, la lunette pouvant se connecter à différents types de supports tandis que l'appareil pouvant se connecter efficacement et en quelques secondes à n'importe quel appareil externe via Bluetooth, tel qu'une oreillette, un scanner ou un assistant digital personnel, par exemple un téléphone mobile, une tablette ou un terminal électronique,
- de mitiger la nécessiter de renouveler une flotte de tels appareils externes, réduisant ainsi les coûts et l'impact environnemental grâce à la flexibilité du système,
- une plus grande longévité d'utilisation, permettant de faire au moins deux cycles d'utilisation de quatre heures avec un simple changement de la batterie amovible, de par le fait qu'on affiche des données sans nécessairement de traitement en temps réelle ou de vérification de certificats associés.

De manière surprenante, il a aussi été montré qu'une utilisation, par un utilisateur, du système de réalité assistée selon l'un des aspects ou modes de réalisation précédemment décrits, en combinaison avec l'accessoire de tête selon l'un des aspects ou modes de réalisation précédemment décrits, dans laquelle l'accessoire de tête est attaché à la lunette de réalité assistée, l'utilisateur portant l'accessoire de tête autour de sa tête, l'utilisateur portant le dispositif portable de commande à distance au niveau de l'un de ses bras, de l'un de ses poignets, ou de l'une de ses mains, était particulièrement avantageuse au regard de la description précédente. Ceci permet de fournir un système léger et portable, adapté à une utilisation prolongée, tout en offrant une solution mains libres efficace grâce à la combinaison de la lunette de réalité assistée et de l'accessoire de tête, facilitant ainsi une interaction continue.

Par exemple, lorsque l'utilisateur du système de réalité assistée souhaite combiner celui-ci avec l'utilisation d'un appareil externe via appariement Bluetooth, tel qu'une oreillette, un scanner ou un assistant digital personnel, par exemple un téléphone mobile, une tablette ou un terminal électronique, la solution mains libres que fournit le système léger et portable permet de faciliter une interaction continue de longue durée avec le scanner portable sans nécessiter de manipulation constante par l'utilisateur.

En outre, selon un mode de réalisation possible de cette utilisation, il est avantageux de mettre en oeuvre cette utilisation comme outil de traçabilité de produits chimiques ou pharmaceutiques dans un hôpital, dans un laboratoire ou dans une pharmacie, lesdits produits chimiques ou pharmaceutiques étant porteurs d'éléments d'identification, ces éléments d'identification étant de préférence lisibles par le système de réalité assistée.

En outre, selon un autre mode de réalisation possible de cette utilisation, il est avantageux de mettre en oeuvre cette utilisation comme outil de traçabilité d'accessoires, de meubles et/ou de produits de consommation dans un magasin ou dans un entrepôt, lesdits accessoires, meubles et/ou produits de consommation étant porteurs d'éléments d'identification, ces éléments d'identification étant de préférence lisibles par le système de réalité assistée.

De manière surprenante, il a en effet été constaté que ces utilisations de la lunette de réalité assistée, en combinaison avec le dispositif portable de commande à distance, en option avec l'accessoire de tête, accélérait et rendait hautement efficace le suivi et la manipulation de tels produits par l'utilisateur. En effet, ces produits, qui sont souvent de petite taille, de grande valeur et fragiles à déplacer, nécessitent une identification rapide ainsi que des manipulations manuelles précises, ce qui est facilité par la solution mains libres fournies par cette utilisation.

Il est évident pour l'homme de l'art que les modes de réalisation décrits dans les présentes peuvent être réalisés sous d'autres formes sans s'écarter des caractéristiques essentielles de la présente divulgation. En conséquence, les présentes ne doivent pas être interprétées comme restrictives dans tous ses termes, et la portée des modes de réalisation décrits dans les présentes doit être déterminée à la lecture des revendications ci-annexées.

## Revendications

1. Lunette de réalité assistée (10) adaptée pour être attachée à un accessoire de tête (30) d'un utilisateur (U), la lunette (10) comprenant une tête optique (120) et un corps principal (140), la tête optique (120) et le corps principal (140) étant reliés l'une à l'autre par une articulation (160), l'articulation (160) permettant une rotation de la tête optique (120) par rapport au corps principal (140) autour d'un axe vertical du corps principal (140), appelé premier axe, la tête optique (120) comprenant un module optique (111) qui est connecté à un circuit de commande (1100), le corps principal (140) comprenant le circuit de commande (1100), le circuit de commande (1100) comprenant une antenne de communication à distance (143), le corps principal (140) étant adapté pour être relié à une batterie électrique amovible (141) configurée pour alimenter électriquement le circuit de commande (1100) et le module optique (111), le corps principal (140) comprenant en outre un élément de fixation (149) pour attacher le corps principal (140) à l'accessoire de tête (30), le circuit de commande (1100) étant configuré pour faire afficher, par le module optique (120), à partir de données d'affichage reçues par l'antenne de communication à distance (143), des informations graphiques visibles par l'utilisateur (U).

2. Lunette de réalité assistée (10) selon la revendication 1, dans laquelle l'articulation (160) limite la rotation de la tête optique (120) par rapport au corps principal (140) autour du premier axe par un premier angle sensiblement compris entre -15° et +40°, le premier angle étant appelé angle de lacet, l'angle de lacet étant mesuré entre un axe horizontal principal de la tête optique (120) et un axe horizontal principal du corps principal (140), l'angle de lacet étant défini comme étant égal à 0° lorsque l'axe horizontal principal de la tête optique (120) et l'axe horizontal principal du corps principal (140) sont perpendiculaires entre eux.

3. Lunette de réalité assistée (10) selon la revendication 1 ou 2, dans laquelle le module optique (111) est pivotable en rotation autour d'un axe de la tête optique (120), appelé deuxième axe, le deuxième axe étant situé dans un plan horizontal qui est sensiblement perpendiculaire au premier axe, la rotation d'un axe principal du module optique (111) étant limitée autour du deuxième axe par un deuxième angle, appelé angle de roulis, qui est sensiblement compris entre -25° et +25° lorsque l'angle de roulis est mesuré par rapport au plan horizontal, l'axe principal du module optique (111) étant situé dans un plan qui est parallèle au premier axe et perpendiculaire au deuxième axe, l'angle de roulis étant défini comme étant égal à 0° lorsque l'axe principal du module optique (111) est sensiblement perpendiculaire au premier axe.

4. Lunette de réalité assistée (10) selon l'une quelconque des revendications précédentes, dans laquelle l'élément de fixation (149) comprend une rotule sphérique de fixation.

5. Lunette de réalité assistée (10) selon l'une quelconque des revendications précédentes, dans laquelle le circuit de commande (1100) est activable sur réception, par l'antenne de communication à distance (143), d'une requête d'appariement par communication Bluetooth.

6. Lunette (10) selon l'une quelconque des revendications précédentes, dans laquelle :
- la batterie électrique amovible (141) est une batterie lithium-polymère, Li-Po, ou une batterie phosphate-lithium-fer, LiFe,
- la batterie présente une capacité comprise entre 300 et 12000 milliampères-heure,
- le poids total de la lunette est inférieur à 50 grammes,
- un connecteur USB-C est prévu pour permettre la recharge de la batterie électrique amovible (141) et l'échange de données avec un ordinateur, et/ou
- le circuit de commande (1100) est relié à un élément d'activation de la lunette (10) qui est disposé sur une surface externe de la lunette (10), l'élément d'activation consistant en un seul bouton.

7. Lunette (10) selon l'une quelconque des revendications précédentes, comprenant en outre un émetteur sonore (147) et/ou un récepteur sonore, l'émetteur sonore (147) et/ou le récepteur sonore étant alimenté(s) par la batterie électrique amovible (141).

8. Lunette (10) selon l'une quelconque des revendications précédentes, dans laquelle le corps principal (140) comprend au moins un capteur micro-électronique (145), l'au moins un capteur micro-électronique (145) comprenant au moins un élément choisi sélectionné parmi un accéléromètre tridimensionnel et un capteur gyroscopique.

9. Lunette (10) selon l'une quelconque des revendications précédentes, dans laquelle l'accessoire de tête (30) est sélectionné parmi un serre-tête, un casque ou une monture de lunettes de vue, un bandeau de tête, un bonnet, ou une casquette, la fixation de l'élément de fixation (149) de la lunette (10) à l'accessoire de tête (30) étant mise en oeuvre avec un élément de réception (37) de l'accessoire de tête (30).

10. Dispositif portable de commande à distance (20) de la lunette de réalité assistée (10) selon l'une quelconque des revendications précédentes, comprenant une interface tactile homme-machine (201, 202, 216), un émetteur-récepteur (22) et un circuit imprimé électronique (2200), l'interface tactile homme-machine (201, 202, 216), l'émetteur-récepteur (22) et le circuit imprimé électronique (2200) étant alimentés par une batterie interne (24) du dispositif portable de commande à distance (20), le circuit imprimé électronique (2200) étant connecté à l'interface tactile homme-machine (201, 202, 216) et à l'émetteur-récepteur (22), l'émetteur-récepteur (22) étant configuré pour envoyer des données d'affichage à l'antenne de communication à distance (143) de la lunette de réalité assistée (10) en fonction d'au moins une commande donnée par l'utilisateur (U) à l'interface tactile homme-machine (201, 202, 216).

11. Dispositif portable de commande à distance (20) selon la revendication 10, dans lequel l'émetteur-récepteur (22) est configuré pour envoyer les données d'affichage à l'antenne de communication à distance (143) par communication Bluetooth, l'émetteur-récepteur (22) étant en outre configuré pour envoyer et recevoir des données par communication Wi-Fi.

12. Dispositif portable de commande à distance (20) selon la revendication 10 ou 11, dans lequel le dispositif portable de commande à distance (20) est adapté pour être attaché à l'utilisateur (U), l'interface tactile homme-machine (201, 202, 216) comprenant un clavier, le clavier comprenant au moins une touche à pression tactile.

13. Système de réalité assistée (1) comprenant la lunette de réalité assistée (10) selon l'une quelconque des revendications 1 à 9 et le dispositif portable de commande (20) selon l'une quelconque des revendications 10 à 12.

14. Accessoire de tête (30) adapté pour être attaché à la lunette de réalité assistée (10) selon l'une quelconque des revendications 1 à 9, l'accessoire de tête (30) comprenant un élément de réception (39) adapté pour être attaché à la lunette (10), l'élément de réception latéral (39) étant en outre adapté pour recevoir, par insertion, l'élément de fixation (149), l'accessoire de tête (30) comprenant en outre un bandeau réglable configuré pour modifier les dimensions de l'accessoire de tête (30) entre une taille minimale et une taille maximale.

15. Utilisation, par un utilisateur, du système de réalité assistée (1) selon la revendication 13 en combinaison avec l'accessoire de tête (30) selon la revendication 14, dans laquelle l'accessoire de tête (30) est attaché à la lunette de réalité assistée (10), l'utilisateur portant l'accessoire de tête autour de sa tête, l'utilisateur portant le dispositif portable de commande à distance (20) au niveau de l'un de ses bras, de l'un de ses poignets, ou de l'une de ses mains.
